# FASCICULE DE BREVET EUROPEEN

(11) **EP 3 963 420 B1**
(45) Date de publication et mention de la délivrance du brevet: **10.07.2024**
(21) Numéro de dépôt: 20731924.5
(22) Date de dépôt: 04.05.2020
(51) Int. Cl.: G05D 1/02, A01B 69/04, A01B 79/00

(54) **PROCEDE DE GESTION DE FLOTTES DE VEHICULES AGRICOLES AUTOGUIDES**
VERFAHREN ZUR VERWALTUNG VON FLOTTEN VON SELBSTGEFÜHRTEN LANDWIRTSCHAFTLICHEN FAHRZEUGEN
METHOD FOR MANAGING FLEETS OF SELF-GUIDED AGRICULTURAL VEHICLES

(30) Priorité: 02.05.2019 FR 1904637
(43) Date de publication de la demande: 09.03.2022
(73) Titulaire: Agreenculture, 31520 Ramonville-Saint-Agne (FR)
(72) Inventeur: GOUA-DE-BAIX, Emmanuel, 31520 RAMONVILLE-SAINT-AGNE (FR); BARON, Clément, 31520 RAMONVILLE-SAINT-AGNE (FR)
(74) Mandataire: IP Trust
(86) Numéro de dépôt international: PCT/FR2020/050740
(87) Numéro de publication internationale: WO 2020/221981

(56) Documents cités:
- US-A1- 2007 233 374
- US-A1- 2018 364 726

## Description

### Domaine de l'invention

La présente invention concerne le domaine des véhicules agricoles autoguidés, et en particulier une flotte de véhicules agricoles autoguidés et un système capable d'effectuer une pluralité d'opérations liées à l'agriculture et notamment pour les cultures en rangs.

Le développement des technologies de géolocalisation permet de diriger, avec des dispositifs de guidage, des tracteurs, moissonneuses-batteuses et autres véhicules agricoles, afin de supprimer en partie la pénibilité du travail dans les champs, d'accroître la productivité et de réduire les coûts dans toutes les activités. Ces véhicules agricoles autoguidés présentent de nombreux avantages et permettent notamment :
- la suppression des chevauchements et les surfaces oubliées,
- des économies de carburant, de temps et de coûts,
- une diminution de l'usure de la zone active des organes de travail des outils et/ou des machines,
- la réduction du compactage du sol, grâce à un nombre réduit de passages
- le contrôle du trafic de l'exploitation,
- une meilleure mise en place des récoltes.

La plupart des dispositifs de guidage connus utilisent la navigation basée sur un système de positionnement par satellites également désigné sous le sigle anglais GNSS (pour Global Navigation Satellite System) tels que le GPS (Global Positioning System).

Les cultures de tout type, que ce soit les cultures de fruits, de légumes, de céréales, les vignes nécessitent de nombreuses opérations comme par exemple le désherbage, le labourage, le semis, le binage, la tonte, le fauchage, la pulvérisation.

L'invention concerne plus particulièrement l'autoguidage de flottes de véhicules agricoles autoguidés se déplaçant de concert sur la surface à travailler selon des lignes prédéfinies. Ces véhicules peuvent ainsi être plus légers, plus agiles et plus rapides.

On entend par « ligne » au sens du présent brevet un chemin continu fermé ou ouvert susceptible d'être parcouru par un desdits véhicules agricoles (ligne de guidage) et/ou parcourue par un élément de travail de l'outil dudit véhicule agricole (ligne de travail). La topologie des lignes est calculée préalablement à la mise en oeuvre de la présente invention.

Pour les cultures en rang, par exemple le maïs ou le tournesol, chaque rang de culture correspond à une ligne de travail.

Pour les cultures pérennes, par exemple vergers ou vignes, chaque rang et chaque inter-rang de culture correspond à une ligne de travail, chaque inter-rang constituant une ligne de guidage pour un engin non-enjambeur.

Pour les cultures pérennes avec des engins enjambeurs, par exemple des pépinières ou des vignes, chaque rang correspond à une ligne de guidage.

Pour les autres cultures, par exemple du blé, la surface de travail est traversée par les lignes de guidages formant une couverture complète, compte tenu de la largeur de l'outil de travail.

### État de la technique

On connaît dans l'état de la technique la demande de brevet US2018/364726 décrivant un système de commande d'un système de véhicule de travail agricole comprenant un contrôleur avec une mémoire et un processeur, le contrôleur étant configuré pour :
- Déterminer une pluralité de partitions basées, au moins en partie, sur une carte d'un champ agricole ;
- Déterminer une liste de partitions de la pluralité de partitions sur la base, au moins en partie, d'un ensemble de caractéristiques de délimitation de chacune de la pluralité de partitions ;

- Déterminer un ordre de la pluralité de partitions sur la base de la liste de partitions de la pluralité de partitions ; et
- Produire un signal indicatif d'un chemin de déplacement pour le véhicule de travail agricole.

Cette solution n'est pas satisfaisante pour plusieurs raisons. En premier lieu elle nécessite des échanges permanents, avec des débits importants, entre le véhicule autonome et le serveur lorsque c'est le serveur qui pilote un ou plusieurs robots, ou une puissance de calcul importante pour le calculateur du véhicule autonome, ainsi qu'une capacité de communication entre les véhicules autonomes pour coordonner leurs déplacements.

Dans une zone de culture, les conditions de radiocommunication ne sont pas toujours de grande qualité, et le fait que le serveur permette à l'opérateur de « télécommander » certaines fonctions du véhicule de travail (par exemple, démarrer et arrêter le véhicule de travail, demander au véhicule de travail de suivre un itinéraire à travers le champ, etc.) constitue un risque en cas de mauvaise communication.

Cette solution est aussi basée sur le partitionnement de l'espace de travail, ce qui ne permet pas d'optimiser les déplacements, car ils sont cantonnés dans une superficie fermée et de dimensions nécessairement inférieures aux dimensions de l'espace total à traiter. Cette solution interdit en particulier le travail dans une même partition de plusieurs véhicules.

On connaît aussi la demande de brevet US2007 /0233374 A1 décrivant un procédé pour créer un plan d'itinéraire pour un groupe de systèmes de machines agricoles et un système de planification d'itinéraire correspondant. Cette solution de l'art antérieur prévoit la mise en réseau les différents systèmes de planification d'itinéraires et l'échange constant de données, pour déterminer individuellement des itinéraires pour les systèmes de machines individuels, les itinéraires des autres véhicules respectifs étant pris en compte dans la stratégie d'optimisation. Cette solution implique que tous les systèmes de machines savent alors où ils se trouvent et où se trouvent les autres systèmes de machines.

Le paragraphe [0034], D2 précise que « lorsqu'un nouveau système de machine est ajouté, il suffit d'établir une communication avec les autres systèmes de machine et de « s'annoncer » au sein du groupe. Pour ce faire, il transmet ses données de planification d'itinéraire disponibles qui, dans le cas le plus simple, sont ses propres données de position, ses paramètres machine et des informations sur le fait que ce système machine est censé participer à cette opération. Il reçoit ensuite les données de planification d'itinéraire des autres systèmes de la machine, y compris le plan de route existant ».

Cela montre que chaque véhicule calcule son itinéraire et échange des informations avec tous les autres véhicules, alors que l'invention prévoit au contraire exclusivement une communication légère entre chacun des véhicules et le superviseur.

### Solution apportée par l'invention

Afin de remédier aux inconvénients de l'art antérieur, la présente invention est basée sur la dissociation entre :
a) - le calcul de la topologie de la zone de déplacement, réalisé par un calculateur distinct du calculateur d'un des véhicules autonomes, notamment d'un superviseur ou d'un serveur, effectuant les traitements de calcul d'une numérique carte de la surface à traiter avec une définition de lignes de déplacement, associées chacune à un identifiant, sans affection de lignes à un véhicule autonome particulier à ce stade
b) - le guidage, pendant le déplacement sur une ligne dévolue à un véhicule, commandé par le calculateur du véhicule considéré, prenant en compte la carte numérique précalculée par le superviseur.

Avec cette répartition « macroscopique » traitée par le serveur, et microscopique traitée par le calculateur de chacun des véhicules, il est possible de réduire le flux de données échangées entre le serveur de chacun des véhicules autonomes et d'améliorer la robustesse du système même en cas de défaillance des radiocommunications. Ces échanges se limitent à l'émission par le véhicule d'un message court pour signaler son arrivée prochaine à la fin de la ligne allouée, et l'émission par le serveur d'un message bref contenant l'identifiant du véhicule concerné et l'allocation d'une nouvelle ligne.

Une variante de l'invention concerne un procédé prévoyant successivement :
- la communication à une étape initiale de la carte à chacune des machines autonomes
- l'envoi par le superviseur de paquets d'information de faible poids pour indiquer la nouvelle ligne à parcourir à chacune des machines autonomes.
- le calcul des écarts entre la géolocalisation et la position planifiée par le calculateur de la machine autonome et non pas par le superviseur

Pour répondre aux inconvénients des solutions de l'art antérieur, une variante de l'invention concerne un procédé comportant les étapes suivantes :
- la communication à une étape initiale de la carte à chacune des machines autonomes
- l'envoi par le superviseur de paquets d'information de faible poids pour indiquer la nouvelle ligne à parcourir à chacune des machines autonomes.
- le calcul des écarts entre la géolocalisation et la position planifiée par le calculateur de la machine autonome et non pas par le superviseur

A cet effet, l'invention concerne selon son acception la plus générale un procédé de gestion d'une flotte de véhicules agricoles autoguidés présentant les caractéristiques techniques énoncés par la revendication 1.

Avantageusement, ladite carte numérique comporte en outre au moins des données géoréférencées d'au moins une zone à travailler constituée par un ensemble de tronçons de référence d'au moins une ligne ou d'un contour de ladite zone, lesdits véhicules agricoles autoguidés comportent chacun au moins un outil de travail pouvant prendre au moins deux états, ledit calculateur commandant en outre l'état dudit outil de travail en fonction desdites coordonnées de position et de ladite carte numérique. Selon une variante, ladite carte numérique comporte au moins une zone d'intérêt franchissable constituée par un ensemble de tronçons de référence d'au moins une ligne ou d'un contour de ladite zone, et en ce que ledit calculateur local du véhicule agricole autoguidé commande de modification de l'état de son outil de travail en fonction desdites coordonnées de position et en outre desdites données géoréférencées du contour de ladite zone d'intérêt franchissable.

Selon une autre variante, ladite carte numérique comporte lesdites zones d'intérêts sont indexées en fonction d'un type d'outil de travail, et en ce que ladite flotte de véhicules agricoles autoguidés est constituée par un ensemble hétérogène de véhicules agricoles autoguidés associés à des outils de travail différents.

Le traitement de haut niveau consistant à déterminer l'organisation optimale des lignes est effectuée sur le serveur central. Les traitements de suivi de précision de la ligne allouée sont traités exclusivement par le calculateur de chaque véhicule autonome, sans intervention sur serveur. Entre l'allocation d'une nouvelle ligne et l'arrivée à la fin de la ligne, le véhicule fonctionne donc de manière totalement autonome, sans nécessiter d'échanges avec le serveur. Lorsqu'il approche de la fin de la ligne allouée, il émet un message contenant son identifiant. En l'absence de réponse du serveur, le calculateur du véhicule autonome active une procédure de sécurité, par exemple mise à l'arrêt. Si au contraire le serveur transmet un message d'allocation d'une nouvelle ligne, le calculateur du véhicule autonome reprend la commande pour le suivi de la nouvelle ligne.

Selon une autre variante, il comporte le cantonnement ou la réservation des lignes alloués, l'étape de transmission desdits messages d'allocation excluant les lignes appartenant auxdites lignes cantonnés ou réservées.

Selon une autre variante, ladite carte numérique comporte en outre au moins des données géoréférencées de contour d'au moins une zone indexée de maintenance,
le déplacement de chacun desdits véhicules agricoles autoguidés étant commandé par un calculateur local en fonction de la zone de maintenance indexée allouée en réponse à un message de service et lesdites coordonnées de position.

Selon une autre variante, ledit message de service est transmis par lesdits véhicules agricoles autoguidés lorsqu'il approche de l'extrémité de la ligne allouée, et comporte les coordonnées instantanées.

Selon une autre variante, ledit message de service comportant les coordonnées instantanées du véhicule est transmis périodiquement par chacun desdits véhicules agricoles autoguidés.

Avantageusement, lesdits véhicules agricoles autoguidés échangent périodiquement lesdits messages et recalculent les allocations de ligne et/ou de zone de chacun desdits véhicules agricoles autoguidés.

Selon une variante, le procédé comporte des étapes d'enregistrement de paquets de données comprenant la position instantanée transmise par le calculateur local ainsi que l'état des outils de travail, et de transmission périodique dudit paquets de données à un serveur distant.

Selon une autre variante, lesdits véhicules agricoles autoguidés comportent des moyens de détection de zones d'intérêts et de transmission de données géoréférencées d'une zone d'intérêt détectée pour le recalcule de ladite carte numérique.

Selon une autre variante, ledit calculateur local de chacun desdits véhicules agricoles autoguidé commande l'arrêt en cas de détection d'un franchissement d'un contour.

Selon une autre variante, il comporte des étapes de changement dynamique des zones franchissables en zones non franchissables lorsque toutes les lignes débouchant dans la zone ont été travaillées.

Selon une autre variante, il comporte des étapes de transmission de données géoréférencées d'une zone d'intérêt détectée par un équipement tiers, pour le recalcul de ladite carte numérique.

Selon une autre variante, il comporte des étapes de changement dynamique des zones franchissables en zones non franchissables lorsque toutes les lignes débouchant dans la zone ont été travaillées.

L'invention concerne aussi un véhicule agricole autoguidé comportant un moyen de détermination en temps réel des coordonnées de sa position instantanée, et une mémoire numérique pour enregistrer une carte numérique transmise par un équipement tiers, ladite carte numérique comportant :
∘ au moins des données géoréférencées de contour de la zone de déplacement
∘ et une pluralité de lignes indexées Ri géoréférencées caractérisé en ce que ledit véhicule agricole autoguidé comporte un calculateur pour commander en temps réel le déplacement en fonction de ladite carte numérique enregistrée dans ladite mémoire, d'un message d'allocation d'au moins une ligne indexée Li reçue d'un équipement tiers, et desdites coordonnées de position, ledit calculateur étant en outre configuré pour commander l'émission d'un message de service à destination d'au moins un équipement tiers, pour déclencher l'émission par un équipement tiers d'un nouveau message d'allocation d'une ligne indexée Ri suivant.

### Description détaillée d'un exemple non limitatif de l'invention

La présente invention sera mieux comprise à la lecture de la description détaillée d'un exemple non limitatif de l'invention qui suit, se référant aux dessins annexés où :

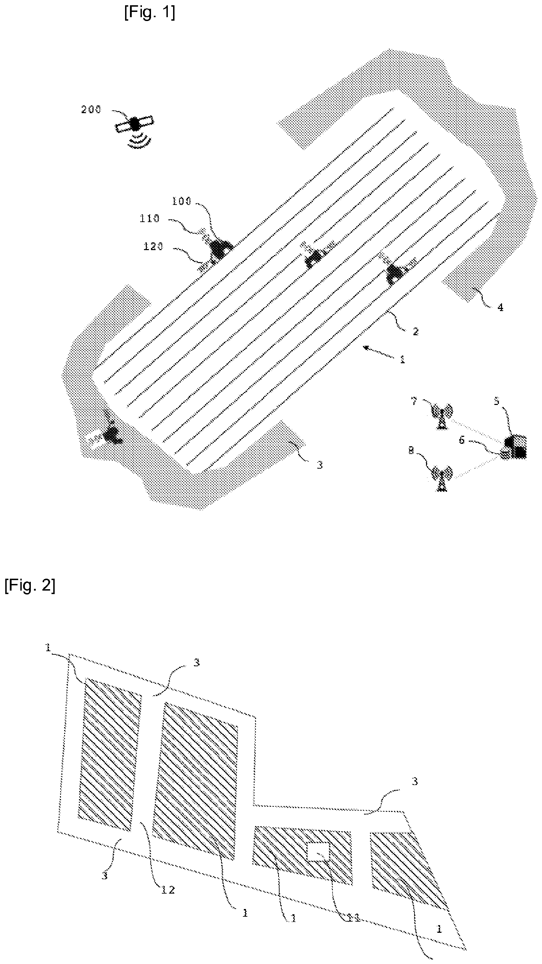

[Fig. 1] la figure 1 représente une vue schématique d'un système pour la mise en oeuvre de l'invention
[Fig. 2]
[Fig. 3]
[Fig. 4] les figures 2 à 4 représentent des calques permettant de calculer une carte numérique
[Fig. 5] la figure 5 représente une vue schématique du parcours d'un engin agricole

### Description des principes généraux.

Le système selon l'invention illustré par la figure 1 concerne un travail d'une aire organisée en une pluralité de lignes (2), avec à l'extrémité des lignes (2) des zones de retournement (3, 4) situés entre la surface cultivable et les limites de circulation des engins agricoles définis par les chaussées routières, fossés, haies et talus bordant la surface à cultiver. La parcelle de terre à culture structurée par des lignes orientées de manière à réduire les manoeuvres. L'intervalle entre deux lignes adjacentes est généralement constant mais peut présenter localement des variations pour tenir compte de spécificités du terrain. Ces lignes sont dans la mesure du possible droites, mais peuvent présenter localement des courbures. Elles définissent les lignes de passage des engins agricoles, pour des travaux tels que le labour, l'ensemencement, le désherbage, la récolte, la pulvérisation de différents composés, etc.

La topologie de la parcelle est calculée par un serveur (5), distinct du calculateur et des équipements de l'un des véhicules autonomes, par des traitements d'optimisation et enregistrée dans une mémoire (6) du serveur sous forme de carte numérique comportant les informations géolocalisées relatives aux lignes (2) et aux zones de retournement (3, 4). Le serveur peut être un équipement fixe, ou un équipement mobile installé à proximité de la surface à travailler, par exemple une camionnette comportant un système informatique, des moyens de radiocommunication et une alimentation.

Le système comporte également des engins autonomes (100) tractant un attelage de travail (120). Chacun des engins autonomes (100) est équipé de moyens propres de géolocalisation (110), par exemple par un système de géolocalisation satellitaire (200).

Un planificateur calcule l'allocation des tâches de chaque engin et particulièrement les trajectoires de déplacement de chacun des engins autonomes (100), et transmet aux engins autonomes (100) les informations nécessaires pour assurer le suivi de la trajectoire allouée en fonction des données de géolocalisation reçues localement par chacun des engins.

La trajectoire sur la parcelle est calculée en fonction de la ligne allouée.

### Description d'un exemple détaillée d'une culture de maïs en rang

Cet exemple concerne la mise en oeuvre de l'invention pour le semis d'un champ de maïs présentant une zone à semer (1) en rayé sur la figure 2, avec en périphérie des zones fourrières (3) servant consécutivement aux manoeuvres des engins puis au semis, ainsi que des obstacles non franchissables (11), par exemple une éolienne, et des zones franchissables (12) ne devant pas être ensemencées, par exemple des chemins de traverses ou des passages de tuyaux d'irrigation.

Ces informations sont précalculées en amont du procédé selon l'invention et enregistrées sous forme d'un premier calque numérique.

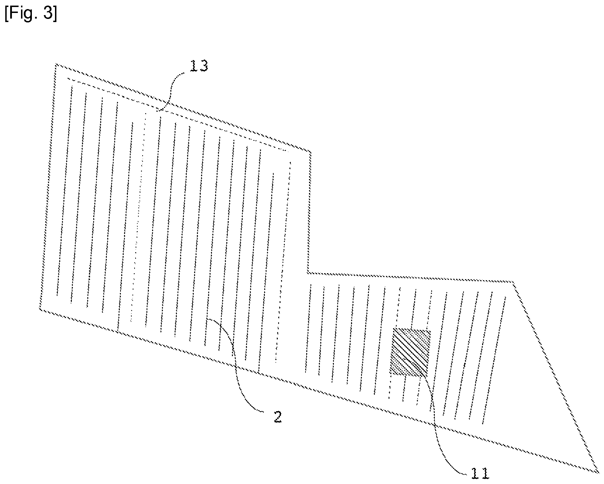

Les données initiales comportent un second calque illustré par la figure 3, présentant un ensemble de lignes, comprenant des lignes (2) correspondant à la zone à semer (1) ainsi que des lignes (13) correspondant aux lignes de déplacement dans les zones franchissables (12).

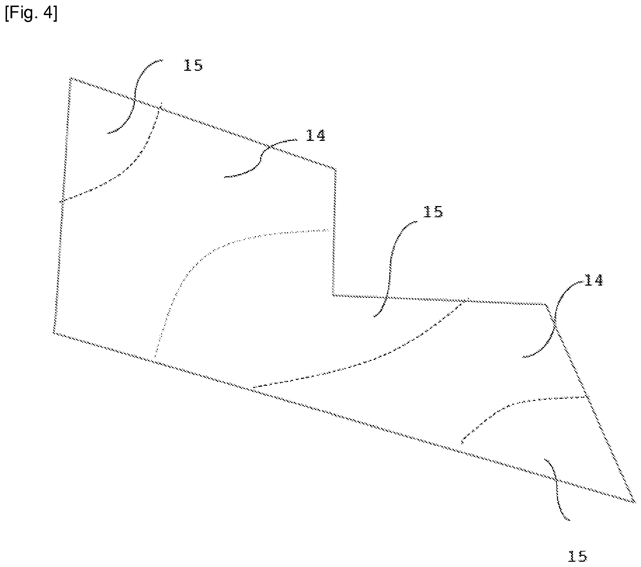

Un troisième calque illustré par la figure 4 présente des zones (14, 15) différenciées en fonction de la carte de préconisation. Par exemple, pour un semis, certaines zones (14) nécessitent un semis dense, et la valeur associée à cette zone sera par exemple 100.000 pieds par hectare, alors que les zones (15) moins fertiles ne nécessitent que 85.000 pieds à l'hectare.

Chacun des calques est géoréférencé pour permettre le rapprochement avec une carte numérique géographique ainsi qu'avec toute autre information topographique.

Ces calques numériques sont téléchargés soit directement dans la mémoire embarquée de chacun des véhicules agricoles, soit transmises à un planificateur réalisant un prétraitement et transmettant ensuite une carte numérique résultant de ce traitement à chacun des véhicules agricoles autonomes.

Lorsque la flottille de véhicules agricoles autonomes (100) est installée sur le champ, chacun reçoit du planificateur un message d'allocation de lignes à parcourir et/ou de lignes à travailler, sous forme de référence aux objets numériques de ladite carte numérique enregistrée localement.

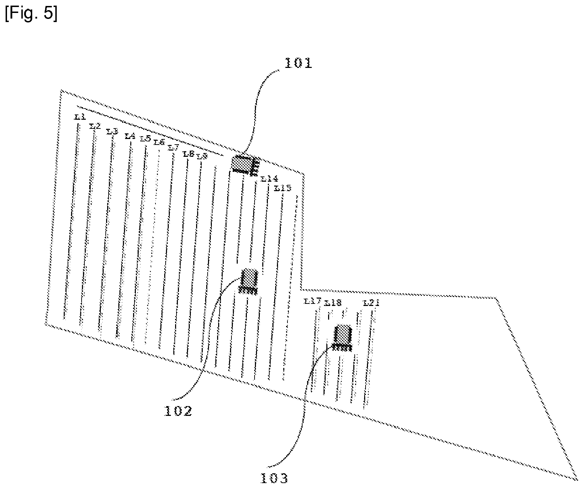

Par exemple, le premier robot (100) est disposé au départ sur une zone fourrière (3) comme représenté en figure 5. Dans la mémoire locale de ce premier robot (100), est enregistrée d'une part la carte numérique résultant des différents calques susvisés, ainsi que les lignes allouées, par exemple une ligne de manoeuvre (LM1) et un ensemble de lignes consécutives (L1 à L5), pour un robot travaillant sur cinq rangs, avec la ligne médiane L3 constituant la référence de guidage du déplacement du premier véhicule agricole (100).

Selon une première option, les lignes alloués initialement sont limitées à une longueur de la zone à travailler. Lorsque le véhicule agricole (100) approche de l'extrémité de cette longueur, le planificateur lui envoie un nouveau message d'allocation de la série de lignes pour la longueur suivante. A cet effet, le véhicule agricole (100) émet périodiquement un message numérique comprenant son identifiant et la position résultant des moyens de géolocalisation embarqués ainsi qu'un acquittement des consignes réalisées.

Selon une autre option, le planificateur transmet une pluralité de série d'allocation, permettant au véhicule agricole (100) de traiter une succession de longueurs reliées entre elles par des lignes de manoeuvre (LM1).

Selon un mode de réalisation sécurisé, les messages échangés entre chacun des robots et le planificateur sont cryptés et éventuellement chiffrés de bout-en-bout. Avantageusement, les données transmises et les données reçues par le planificateur sont enregistrées de manière horodatées.

En particulier, les données peuvent être injectés dans un noeud d'une chaîne de bloc (« Blockchain ») de manière à garantir une traçabilité probante des travaux réalisés par chacun des véhicules agricoles.

Dans certaines parties du champ, à la proximité d'une zone franchissable (12) par exemple une partie d'un chemin d'irrigation empiétant sur une ligne L5, le tronçon T5 de ligne traversant cette zone (12) est associée à une consigne interrompant le travail de l'outil correspondant (les autres outils correspondant aux lignes L1 à L4 restant actifs).

Le pilotage et le guidage du véhicule agricole (100) sont assurés uniquement par le calculateur embarqué et les données locales de géolocalisation provenant des moyens propres de géolocalisation du véhicule agricole (100).

Le calculateur du véhicule agricole (100) modifie les commandes de direction du déplacement en fonction des écarts latéraux mesurés par rapport à la ligne de guidage L3 et/ou par rapport aux lignes de travail L1 à L5.

Les outils du véhicule agricole (100) sont pilotés en fonction des données du calque correspondant à la carte de préconisation et des données locales de géolocalisation.

Pour améliorer la précision du travail, le calculateur transmet au circuit de pilotage de l'outil la valeur immédiate de consigne ainsi qu'au moins une valeur future. Le circuit de pilotage peut ainsi optimiser la commande de l'outil pour prendre en compte la dynamique de changement d'état de l'outil.

Le travail est réalisé par une flottille de véhicules agricoles (101, 102, 103) dont certains peuvent porter des outils de natures différents, et/ou de largeurs différentes.

Le planificateur attribue à chacun de ces véhicules agricoles (101 à 103) des messages d'allocation dédiés, calculés de façon à éviter des intersections de trajectoire et pour optimiser le traitement du champ.

Dans le cas où les messages d'allocations sont limités à une zone réservée à un même véhicule agricole (100), définie par les lignes limitées à une longueur, ou aux lignes contenues à l'intérieur d'une zone délimitée, le calculateur local commandera l'arrêt du véhicule agricole (100) avant la fin de la zone réservée en cas de perte de communication avec le planificateur.

Dans le cas où le planificateur reçoit un message de service d'un véhicule agricole (100) correspondant à une fin d'autonomie (par exemple calculée par le planificateur en fonction de l'autonomie résiduelle communiquée par le véhicule agricole (100) et la distance à parcourir sur la longueur suivante) il calcule pour ce véhicule agricole (100) une trajectoire de retour à une zone de maintenance. Les messages enregistrés dans la mémoire du véhicule agricole (100) en fin d'autonomie sont alors remplacés.

Le planificateur recalcule aussi de nouveaux messages d'allocation aux véhicules agricoles (100) restant opérationnels en fonction du retrait du véhicule agricole (100).

Optionnellement le planificateur communique occasionnellement des messages de changement de l'état des zones, par exemple lorsque la totalité de la zone à cultiver a été traitée, les zones de manoeuvres deviennent des zones cultivables. Le message transmis par le planificateur est traité par le calculateur de chaque véhicule agricole (100) pour modifier le calque numérique afin de prendre en compte le changement d'état de certaines zones.

### Planificateur distribué

Selon une variante d'implémentation, le planificateur centralisé est remplacé par une solution distribuée où les calculateurs locaux de chacun des véhicules agricoles (100) échangent des messages de négociation d'allocation de tâches. Chaque calculateur peut par exemple enregistrer la table d'allocation spécifique au véhicule considéré, ainsi que les tables d'allocation des autres véhicules et procède à une vérification d'absence de recouvrement.

## Revendications

1. Procédé de gestion d'une flotte de véhicules agricoles autoguidés (100) comportant chacun un calculateur et un moyen de détermination en temps réel des coordonnées de sa position instantanée, ledit procédé comporte :
a) une étape initiale de calcul de la topologie de la zone de déplacement, réalisé par un calculateur d'un superviseur distinct du calculateur d'un des véhicules autonomes, ledit calculateur effectuant les traitements de calcul d'une carte numérique de la surface à traiter avec une définition de lignes de déplacement, associées chacune à un identifiant, sans affection de lignes à un véhicule autonome particulier ladite carte numérique comportant :
• au moins des données géoréférencées de contour de la zone de déplacement
• et une pluralité de lignes indexées Lᵢ géoréférencées
**caractérisé en ce que** ledit procédé comporte:
b) des étapes de guidage, pendant le déplacement sur une ligne dévolue à un véhicule, commandé par le calculateur du véhicule considéré, prenant en compte la carte numérique précalculée par le superviseur, consistant à transmettre à chacun des véhicules agricoles autoguidés des messages d'allocation d'au moins une ligne indexée Lᵢ
- le procédé comporte en outre une étape initiale d'enregistrement dans une mémoire numérique de chacun desdits véhicules agricoles au moins une copie de ladite carte numérique
- le déplacement de chacun desdits véhicules agricoles autoguidés étant commandé par un calculateur local en fonction des lignes indexées Lᵢ allouées et lesdites coordonnées de position
- lesdits messages d'allocation d'une ligne indexée Lᵢ suivante étant transmis à un véhicules agricoles autoguidés lorsque l'un desdits véhicules agricoles autoguidés transmet un message de service.

2. Procédé de gestion d'une flotte de véhicules agricoles autoguidés selon la revendication 1 **caractérisé en ce que** ladite carte numérique comporte en outre au moins des données géoréférencées d'au moins une zone à travailler constituée par un ensemble de tronçons de référence d'au moins une ligne ou d'un contour de ladite zone et **en ce que** lesdits véhicules agricoles autoguidés comportent chacun au moins un outil de travail pouvant prendre au moins deux états, ledit calculateur commandant en outre l'état dudit outil de travail en fonction desdites coordonnées de position et de ladite carte numérique.

3. Procédé de gestion d'une flotte de véhicules agricoles autoguidés selon la revendication 2 **caractérisé en ce que** ladite carte numérique comporte au moins une zone d'intérêt franchissable constituée par un ensemble de tronçons de référence d'au moins une ligne ou d'un contour de ladite zone, et **en ce que** ledit calculateur local du véhicule agricole autoguidé commande la modification de l'état de son outil de travail en fonction desdites coordonnées de position et en outre desdites données géoréférencées du contour de ladite zone d'intérêt franchissable.

4. Procédé de gestion d'une flotte de véhicules agricoles autoguidés selon la revendication 3 **caractérisé en ce que** lesdites zones d'intérêts sont indexées en fonction d'un type d'outil de travail, et **en ce que** ladite flotte de véhicules agricoles autoguidés est constituée par un ensemble hétérogène de véhicules agricoles autoguidés associés à des outils de travail différents.

5. Procédé de gestion d'une flotte de véhicules agricoles autoguidés selon la revendication 1 **caractérisé en ce qu'**il comporte une réservation des lignes allouées, ladite étape de transmission desdits messages d'allocation excluant les lignes appartenant auxdites lignes réservées.

6. Procédé de gestion d'une flotte de véhicules agricoles autoguidés selon la revendication 1 **caractérisé en ce que** ladite carte numérique comporte en outre au moins des données géoréférencées de contour d'au moins une zone indexée de maintenance,
- le déplacement de chacun desdits véhicules agricoles autoguidés étant commandé par un calculateur local en fonction de la zone de maintenance indexée allouée en réponse à un message de service et lesdites coordonnées de position.

7. Procédé de gestion d'une flotte de véhicules agricoles autoguidés selon la revendication 1 **caractérisé en ce que** ledit message de service est transmis par lesdits véhicules agricoles autoguidés lorsqu'il approche de l'extrémité du tronçon de la ligne allouée, et comporte les coordonnées instantanées.

8. Procédé de gestion d'une flotte de véhicules agricoles autoguidés selon la revendication 1 **caractérisé en ce que** ledit message de service comportant les coordonnées instantanées du véhicule est transmis périodiquement par chacun desdits véhicules agricoles autoguidés.

9. Procédé de gestion d'une flotte de véhicules agricoles autoguidés selon l'une quelconque des revendications précédentes **caractérisé en ce que** lesdits véhicules agricoles autoguidés échangent périodiquement lesdits messages et recalculent les allocations de ligne et/ou de zone de chacun desdits véhicules agricoles autoguidés.

10. Procédé de gestion d'une flotte de véhicules agricoles autoguidés selon les revendications 8 ou 9, lorsqu'elles sont prises en combinaison avec la revendication 2, **caractérisé en ce qu'**il comporte des étapes d'enregistrement de paquets de données comprenant la position instantanée transmise par le calculateur local ainsi que l'état des outils de travail, et de transmission périodique dudit paquets de données à un serveur distant.

11. Procédé de gestion d'une flotte de véhicules agricoles autoguidés selon l'une quelconque des revendications précédentes **caractérisé en ce que** lesdits véhicules agricoles autoguidés comportent des moyens de détection de zones d'intérêts et de transmission de données géoréférencées d'une zone d'intérêt détectée pour le recalcul de ladite carte numérique.

12. Procédé de gestion d'une flotte de véhicules agricoles autoguidés selon l'une quelconque des revendications précédentes **caractérisé en ce qu'**il comporte des étapes de transmission de données géoréférencées d'une zone d'intérêt détectée par un équipement tiers, pour le recalcul de ladite carte numérique.

13. Procédé de gestion d'une flotte de véhicules agricoles autoguidés selon l'une quelconque des revendications précédentes **caractérisé en ce que** ledit calculateur local de chacun desdits véhicules agricoles autoguidé commande l'arrêt en cas de détection d'un franchissement d'un contour.

14. Procédé de gestion d'une flotte de véhicules agricoles autoguidés selon la revendication 3 **caractérisé en ce qu'**il comporte des étapes de changement dynamique des zones franchissables en zones non franchissables.

15. Ensemble constitué d'un superviseur et d'une flotte de véhicules agricoles autoguidés, ledit ensemble étant équipé selon la revendication 1 et configuré pour réaliser le procédé de gestion selon la revendication 1.

## Patentansprüche

1. Verfahren zum Verwalten einer Flotte von selbstgeführten landwirtschaftlichen Fahrzeugen (100), die jeweils einen Rechner und ein Mittel zur Echtzeitbestimmung der Koordinaten ihrer aktuellen Position aufweisen, wobei das Verfahren Folgendes aufweist:
a) einen ersten Schritt zum Berechnen der Topologie der Fahrzone, der von einem Rechner eines Supervisors ausgeführt wird, der sich vom Rechner eines der autonomen Fahrzeuge unterscheidet, wobei der Rechner die Berechnungsverarbeitung einer digitalen Karte der zu bearbeitenden Oberfläche mit einer Definition von Fahrlinien durchführt, die jeweils einer Kennung zugeordnet sind, ohne Linien einem bestimmten autonomen Fahrzeug zuzuordnen, wobei die digitale Karte Folgendes aufweist:
• mindestens georeferenzierte Konturdaten der Fahrzone
• und eine Vielzahl von georeferenzierten indizierten Linien Lᵢ,
**dadurch gekennzeichnet, dass** das Verfahren Folgendes aufweist:
b) Führungsschritte während des Fahrens auf einer einem Fahrzeug zugewiesenen Linie, gesteuert vom Rechner des betreffenden Fahrzeugs, unter Berücksichtigung der vom Supervisor vorberechneten digitalen Karte, bestehend aus der Übermittlung von Nachrichten der Zuordnung mindestens einer indizierten Linie Lᵢ an jedes der selbstgeführten landwirtschaftlichen Fahrzeuge
- das Verfahren weist ferner einen ersten Schritt zum Aufzeichnen mindestens einer Kopie der digitalen Karte in einem digitalen Speicher jedes der landwirtschaftlichen Fahrzeuge auf
- wobei das Fahren jedes der selbstgeführten landwirtschaftlichen Fahrzeuge von einem lokalen Rechner in Abhängigkeit der zugewiesenen indizierten Linien Lᵢ und den Positionskoordinaten gesteuert wird
- wobei die Zuordnungsnachrichten einer folgenden indizierten Linie Lᵢ an ein selbstgeführtes landwirtschaftliches Fahrzeug übermittelt werden, wenn eines der selbstgeführten landwirtschaftlichen Fahrzeuge eine Servicenachricht übermittelt.

2. Verfahren zum Verwalten einer Flotte selbstgeführter landwirtschaftlicher Fahrzeuge nach Anspruch 1, **dadurch gekennzeichnet, dass** die digitale Karte ferner mindestens georeferenzierte Daten mindestens einer zu bearbeitenden Zone umfasst, die aus einer Reihe von Referenzabschnitten mindestens einer Linie oder Kontur der Zone besteht, und **dadurch, dass** die selbstgeführten landwirtschaftlichen Fahrzeuge jeweils mindestens ein Arbeitswerkzeug aufweisen, das in der Lage ist, mindestens zwei Zustände anzunehmen, wobei der Rechner ferner den Zustand des Arbeitswerkzeugs in Abhängigkeit von den Positionskoordinaten und der digitalen Karte steuert.

3. Verfahren zum Verwalten einer Flotte von selbstgeführten landwirtschaftlichen Fahrzeugen nach Anspruch 2,
**dadurch gekennzeichnet, dass** die digitale Karte mindestens eine überfahrbare Zone von Interesse aufweist, die aus einer Reihe von Referenzabschnitten mindestens einer Linie oder Kontur dieser Zone besteht, und **dadurch, dass** der lokale Rechner des selbstgeführten landwirtschaftlichen Fahrzeugs die Änderung des Zustands seines Arbeitswerkzeugs in Abhängigkeit von den Positionskoordinaten und ferner von den georeferenzierten Daten der Kontur der überfahrbaren Zone von Interesse steuert.

4. Verfahren zum Verwalten einer Flotte selbstgeführter landwirtschaftlicher Fahrzeuge nach Anspruch 3, **dadurch gekennzeichnet, dass** die Zonen von Interesse in Abhängigkeit von einem Typ des Arbeitswerkzeugs indiziert werden und **dadurch, dass** die Flotte selbstgeführter landwirtschaftlicher Fahrzeuge aus einem heterogenen Satz selbstgeführter landwirtschaftlicher Fahrzeuge besteht, die verschiedenen Arbeitswerkzeugen zugeordnet sind.

5. Verfahren zum Verwalten einer Flotte selbstgeführter landwirtschaftlicher Fahrzeuge nach Anspruch 1, **dadurch gekennzeichnet, dass** es eine Reservierung der zugewiesenen Linien aufweist, wobei der Schritt des Übermittelns der Zuordnungsnachrichten die Linien ausschließt, die zu den reservierten Linien gehören.

6. Verfahren zum Verwalten einer Flotte selbstgeführter landwirtschaftlicher Fahrzeuge nach Anspruch 1, **dadurch gekennzeichnet, dass** die digitale Karte ferner mindestens georeferenzierte Konturdaten mindestens einer indizierten Wartungszone aufweist,
- wobei das Fahren jedes der selbstgeführten landwirtschaftlichen Fahrzeuge von einem lokalen Rechner in Abhängigkeit von der indizierten Wartungszone gesteuert wird, die als Reaktion auf eine Servicenachricht und die Positionskoordinaten zugewiesen wird.

7. Verfahren zum Verwalten einer Flotte selbstgeführter landwirtschaftlicher Fahrzeuge nach Anspruch 1, **dadurch gekennzeichnet, dass** die Servicenachricht von den selbstgeführten landwirtschaftlichen Fahrzeugen übermittelt wird, wenn sie sich dem Ende des Abschnitts der zugewiesenen Linie nähert, und die aktuellen Koordinaten aufweist.

8. Verfahren zum Verwalten einer Flotte selbstgeführter landwirtschaftlicher Fahrzeuge nach Anspruch 1, **dadurch gekennzeichnet, dass** die Servicenachricht, die die aktuellen Koordinaten des Fahrzeugs aufweist, regelmäßig von jedem der selbstgeführten landwirtschaftlichen Fahrzeuge übermittelt wird.

9. Verfahren zum Verwalten einer Flotte selbstgeführter landwirtschaftlicher Fahrzeuge nach einem der vorstehenden Ansprüche,
**dadurch gekennzeichnet, dass** die selbstgeführten landwirtschaftlichen Fahrzeuge regelmäßig die Nachrichten austauschen und die Linien- und/oder Zonenzuordnungen jedes der selbstgeführten landwirtschaftlichen Fahrzeuge neu berechnen.

10. Verfahren zum Verwalten einer Flotte selbstgeführter landwirtschaftlicher Fahrzeuge nach Anspruch 8 oder 9 in Kombination mit Anspruch 2,
**dadurch gekennzeichnet, dass** es Schritte zum Aufzeichnen von Datenpaketen, die sowohl die vom lokalen Rechner übermittelte aktuelle Position als auch den Zustand der Arbeitswerkzeuge umfassen, und zum regelmäßigen Übertragen der Datenpakete an einen entfernten Server aufweist.

11. Verfahren zum Verwalten einer Flotte selbstgeführter landwirtschaftlicher Fahrzeuge nach einem der vorstehenden Ansprüche,
**dadurch gekennzeichnet, dass** die selbstgeführten landwirtschaftlichen Fahrzeuge Mittel zum Erkennen von Zonen von Interesse und zum Übermitteln von georeferenzierten Daten aus einer erkannten Zone von Interesse zur Neuberechnung der digitalen Karte aufweisen.

12. Verfahren zum Verwalten einer Flotte selbstgeführter landwirtschaftlicher Fahrzeuge nach einem der vorstehenden Ansprüche,
**dadurch gekennzeichnet, dass** es Schritte zum Übermitteln von georeferenzierten Daten einer Zone von Interesse, die durch eine dritte Ausrüstung erkannt wurde, zur Neuberechnung der digitalen Karte aufweist.

13. Verfahren zum Verwalten einer Flotte selbstgeführter landwirtschaftlicher Fahrzeuge nach einem der vorstehenden Ansprüche,
**dadurch gekennzeichnet, dass** der lokale Rechner jedes der selbstgeführten landwirtschaftlichen Fahrzeuge das Anhalten im Falle der Erkennung einer Überfahrung einer Kontur steuert.

14. Verfahren zum Verwalten einer Flotte selbstgeführter landwirtschaftlicher Fahrzeuge nach Anspruch 3, **dadurch gekennzeichnet, dass** es Stufen des dynamischen Übergangs von überfahrbaren Zonen zu nicht überfahrbaren Zonen aufweist.

15. Satz, bestehend aus einem Supervisor und einer Flotte selbstgeführter landwirtschaftlicher Fahrzeuge, wobei der Satz nach Anspruch 1 ausgestattet und zum Durchführen des Verfahrens zum Verwalten nach Anspruch 1 konfiguriert ist.

## Claims

1. Method for managing a fleet of self-guided agricultural vehicles (100) each comprising a computer and means for the real-time determination of the coordinates of its current position, said method comprises:
a) an initial step of calculating the topology of the area of movement, carried out by a computer of a supervisor separate from the computer of one of the self-guided vehicles, said computer performing the calculation processing of a digital map of the surface to be processed with a definition of travel lines, each associated with an identifier, without assigning lines to a particular self-guided, said digital map comprising:
• at least georeferenced border data of the area of movement
• and a plurality of georeferenced indexed lines Lᵢ, **characterized in that** said method comprises:
b) guiding steps, during travel on a line assigned to a vehicle, controlled by the computer of the vehicle in question, taking into account the digital map precalculated by the supervisor, consisting in transmitting to each of the self-guided agricultural vehicles messages allocating at least one indexed line L;
- the method further comprises an initial step of storing at least one copy of said digital map in a digital memory of each of said agricultural vehicles
- the movement of each of said self-guided agricultural vehicles being controlled by a local computer on the basis of the allocated indexed lines Lᵢ and said position coordinates
- said allocation messages for a following indexed line Lᵢ being transmitted to a self-guided agricultural vehicles when said self-guided agricultural vehicle transmits a service message.

2. Method for managing a fleet of self-guided agricultural vehicles according to claim 1, **characterized in that** said digital map further comprises at least georeferenced data for at least one area to be worked constituted by a set of reference sections of at least one line or of a border of said area, and **in that** said self-guided agricultural vehicles each comprise at least one work tool able to assume at least two states, said computer further controlling the state of said work tool as a function of said position coordinates and of said digital map.

3. Method for managing a fleet of self-guided agricultural vehicles according to claim 2, **characterized in that** said digital map comprises at least one crossable area of interest constituted by a set of reference sections of at least one line or of a border of said area, and **in that** said local computer of the self-guided agricultural vehicle commands the change in the state of its work tool on the basis of said position coordinates and also of said georeferenced data of the border of said crossable area of interest.

4. Method for managing a fleet of self-guided agricultural vehicles according to claim 3, **characterized in that** said areas of interest are indexed according to a type of work tool, and **in that** said fleet of self-guided agricultural vehicles is constituted by a heterogeneous set of self-guided agricultural vehicles associated with different work tools.

5. Method for managing a fleet of self-guided agricultural vehicles according to claim 1, **characterized in that** it comprises reserving the allocated lines, said step of transmitting said allocation messages excluding the lines belonging to said reserved lines.

6. Method for managing a fleet of self-guided agricultural vehicles according to claim 1, **characterized in that** said digital map further comprises at least georeferenced border data of at least one indexed maintenance area,
- the movement of each of said self-guided agricultural vehicles being controlled by a local computer on the basis of the indexed maintenance area allocated in response to a service message and said position coordinates.

7. Method for managing a fleet of self-guided agricultural vehicles according to claim 1, **characterized in that** said service message is transmitted by said self-guided agricultural vehicles when it approaches the end of the section of the allocated line, and comprises current coordinates.

8. Method for managing a fleet of self-guided agricultural vehicles according to claim 1, **characterized in that** said service message comprising the current coordinates of the vehicle is transmitted periodically by each of said self-guided agricultural vehicles.

9. Method for managing a fleet of self-guided agricultural vehicles according to any one of the preceding claims, **characterized in that** said self-guided agricultural vehicles periodically exchange said messages and recalculate the line and/or zone allocations of each of said self-guided agricultural vehicles.

10. Method for managing a fleet of self-guided agricultural vehicles according to claims 8 or 9, when they are taken in combination with claim 2, **characterized in that** it comprises steps of recording data packets comprising the current position transmitted by the local computer as well as the state of the work tools, and of periodically transmitting said data packets to a remote server.

11. Method for managing a fleet of self-guided agricultural vehicles according to one of the preceding claims, **characterized in that** said self-guided agricultural vehicles comprise means for detecting areas of interest and for transmitting georeferenced data for a detected area of interest in order to recalculate said digital map.

12. Method for managing a fleet of self-guided agricultural vehicles according to one of the preceding claims, **characterized in that** it comprises steps for transmitting georeferenced data for an area of interest detected by a third-party device, for the recalculation of said digital map.

13. Method for managing a fleet of self-guided agricultural vehicles according to one of the preceding claims, **characterized in that** said local computer of each of said self-guided agricultural vehicles controls stopping if crossing of a border is detected.

14. Method for managing a fleet of self-guided agricultural vehicles according to claim 3, **characterized in that** it comprises steps for dynamically changing the crossable areas into non-crossable areas.

15. Assembly consisting of a supervisor and a fleet of self-guided agricultural vehicles, said assembly being equipped according to claim 1 and configured to perform the management method according to claim 1.
